# DEMANDE DE BREVET EUROPEEN

(11) **EP 4 852 280 A1**
(43) Date de publication de la demande: **09.12.2026**
(21) Numéro de dépôt: 26181816.5
(22) Date de dépôt: 29.05.2026
(51) Int. Cl.: H02K 1/276, H02K 29/03

(54) **ROTOR DE MACHINE ELECTRIQUE COMPRENANT DES AIMANTS PARTAGES ENTRE DEUX POLES MAGNETIQUES**

(30) Priorité: 06.06.2025 FR 2506146
(71) Demandeur: IFP Energies nouvelles, 92500 Rueil-Malmaison (FR)
(72) Inventeur: CISSE, Koua Malick, 92852 RUEIL-MALMAISON CEDEX (FR); DELPIT, Pierre, 92852 RUEIL-MALMAISON CEDEX (FR); GILSON, Adrien, 92852 RUEIL-MALMAISON CEDEX (FR); GROSJEAN, Denis, 92852 RUEIL-MALMAISON CEDEX (FR)
(74) Mandataire: IFP Energies nouvelles

(57) **Abrégé**

La présente invention concerne un rotor et une machine électrique. Le rotor comprenant plusieurs paires de pôles magnétiques (16, 16') comprenant chacun une première barrière de flux (3) et une deuxième barrière de flux (2). Pour chaque pôle magnétique (16, 16') ladite première barrière de flux (3) est constituée de deux évidements latéraux (6) et d'un évidement central (5) et ladite deuxième barrière de flux (2) est constituée de deux évidements inclinés (7). Les évidements latéraux (6) des premières barrières de flux (3) de deux pôles magnétiques successifs sont partagés entre ces deux pôles magnétiques (16, 16'), et le rotor comprend des aimants permanents (8) positionnés dans chaque évidement latéral (6) partagé de chaque première barrière de flux (3). L'épaisseur (e8) des aimants permanents (8) des évidements latéraux (6) partagés desdites premières barrières de flux (3) est d'au moins 2,3 fois l'épaisseur (e9) de l'évidement central (5) des deuxièmes barrières de flux (2).

## Description

### Domaine technique

La présente invention se rapporte à une machine électrique tournante, de préférence synchro-réluctante (assistée ou non d'aimants permanents), et concerne plus particulièrement l'architecture particulière d'un rotor d'une telle machine.

Généralement, une telle machine électrique comporte un stator et un rotor disposés coaxialement l'un dans l'autre.

Le rotor est formé d'un corps de rotor avec un empilage de tôles placé sur un arbre de rotor. Ces tôles comprennent généralement des logements pour des aimants permanents et des perforations pour créer des barrières de flux. Cela permet de diriger radialement le flux magnétique des aimants vers le stator. Cette configuration favorise également la création d'un couple reluctant, et allège ce rotor afin de diminuer les efforts centrifuges que l'empilage de tôle doit supporter.

Ce rotor est généralement logé à l'intérieur d'un stator qui porte des bobinages électriques permettant de générer un champ magnétique permettant d'entraîner en rotation le rotor.

### Technique antérieure

Comme cela est mieux décrit notamment dans la demande de brevet WO2020/020580 A1, le rotor d'une machine synchro-réluctante comprend une pluralité d'évidements axiaux qui traversent les tôles de part en part.

Pour la conception du rotor décrite dans la demande de brevet précitée, une première série d'évidements axiaux, disposés radialement les uns au-dessus des autres et à distance les uns des autres, forment des logements pour des générateurs de flux magnétiques, ici des aimants permanents sous forme de barreaux rectangulaires.

L'autre série d'évidements consiste en des perforations de direction radiale inclinée, qui partent de ces logements pour arriver au voisinage du bord des tôles, au voisinage de l'entrefer.

Les perforations inclinées sont disposées symétriquement par rapport aux logements des aimants de manière à former à chaque fois une figure géométrique sensiblement en forme de U avec le fond plat formé par le logement des aimants et avec les bras latéraux de ces U formés par les perforations. Il se crée ainsi des barrières de flux formées par les perforations. Le flux magnétique provenant des aimants permanents ne peut alors que transiter par les parties pleines entre les perforations. Ces parties pleines sont constituées d'un matériau ferromagnétique. L'espace séparant les perforations inclinées des logements des aimants est appelé pont magnétique ou encore isthme magnétique.

On connait également la demande de brevet WO2022/128541 A1 qui cherche à améliorer les performances de la machine électrique en limitant les contraintes mécaniques. Pour ce faire, la machine électrique comprend une barrière de flux en U et une barrière de flux en V. Les évidements de chaque barrière de flux d'un pôle magnétique sont indépendants des évidements des barrières de flux d'un autre pôle magnétique.

La demande de brevet EP2246966 A1 concerne un rotor de machine électrique avec une seule et unique barrière de flux, où les aimants permanents des évidements latéraux sont partagés entre deux pôles. Ce brevet utilise deux types d'aimants pour magnétiser/démagnétiser les aimants latéraux. Toutefois, des évidements internes supplémentaires sont néfastes au principe même de cette invention puisqu'ils gêneraient la démagnétisation des aimants latéraux.

La demande de brevet FR3019948 A1 concerne un rotor de machine électrique avec une barrière de flux en forme de U et une barrière de flux en forme de V avec des aimants permanents dans chaque barrière de flux. Les aimants permanents latéraux de la barrière de flux interne sont partagés entre deux pôles magnétiques successifs.

### Résumé de l'invention

Le problème technique que se propose de résoudre l'invention consiste à réduire les contraintes mécaniques, tout en réduisant les ondulations de couple, en augmentant la puissance de zone de défluxage et en limitant le risque de démagnétisation des aimants.

L'invention concerne un rotor de machine électrique comprenant un corps de rotor formé par un empilage de tôles, et une pluralité de paires de pôles magnétiques répartis circonférentiellement sur le corps de rotor, chaque pôle magnétique comprenant une première barrière de flux et une deuxième barrière de flux, pour chaque pôle magnétique ladite première barrière de flux étant constituée de deux évidements latéraux positionnés et espacés de part et d'autre d'un évidement central, ledit évidement central étant perpendiculaire à un rayon dudit rotor de manière à ce que ladite première barrière de flux forme un « U », lesdits évidements latéraux de ladite première barrière de flux étant espacés de la périphérie du rotor, pour chaque pôle magnétique ladite deuxième barrière de flux étant constituée de deux évidements inclinés et espacés par rapport audit rayon perpendiculaire audit évidement central de ladite première barrière de flux de manière à ce que la deuxième barrière de flux forme un « V », lesdits évidements inclinés de ladite deuxième barrière de flux étant espacés de la périphérie du rotor, lesdites première et deuxième barrières de flux étant les deux premières barrières de flux de l'intérieur vers l'extérieur, les évidements latéraux des premières barrières de flux de deux pôles magnétiques successifs circonférentiellement étant partagés entre desdits deux pôles magnétiques successifs, le rotor comprenant des aimants permanents positionnés dans chaque évidement latéral partagé de chaque première barrière de flux, et de préférence dans chaque évidement central de chaque première barrière de flux, caractérisé en ce que l'épaisseur des aimants permanents des évidements latéraux partagés desdites premières barrières de flux est d'au moins 2,3 fois l'épaisseur de l'évidement central des premières barrières de flux.

De préférence, les évidements inclinés de chaque deuxième barrière de flux sont vides.

De manière avantageuse, l'épaisseur des aimants permanents des évidements latéraux partagés des premières barrières de flux est d'au moins 6mm, et l'épaisseur de l'évidement central est inférieure à 5mm, de préférence inférieure à 2mm, et de manière encore préférée inférieure à 1,5mm.

Selon un mode de réalisation de l'invention, les évidements latéraux partagés de deux pôles magnétiques successifs sont de section rectangulaire, carrée, trapézoïdale, ou polygonale.

Selon un aspect de l'invention, les évidements inclinés de la deuxième barrière de flux sont de section trapézoïdale, rectangulaire, carrée ou triangulaire.

Selon une configuration de l'invention, le rotor a un diamètre extérieur inférieur à 200 mm, de préférence inférieur à 150mm et de manière encore préférée inférieur à 120mm.

De manière avantageuse, lesdites barrières de flux de chaque pôle magnétique comprennent un plan de symétrie radial, de préférence ledit plan de symétrie radial passant par ledit rayon.

Préférentiellement, le rotor comprend au moins une encoche sur la périphérie cylindrique externe dudit rotor, ladite encoche étant positionnée sensiblement au niveau d'un plan radial passant par le rayon d'un desdits pôles magnétiques.

De manière encore préférée, le rotor comprend une encoche pour chaque pôle magnétique, chacune des encoches étant positionnées sensiblement au niveau du plan radial passant par ledit rayon de chaque pôle magnétique.

Avantageusement, les différents pôles magnétiques sont dissymétriques, de préférence deux à deux successivement.

Selon un mode de réalisation avantageux de l'invention, chaque pôle magnétique est constitué de seulement deux barrières de flux, lesdites deux barrières de flux étant constituée de ladite première barrière de flux et de ladite deuxième barrière de flux.

Alternativement, chaque pôle magnétique est constitué de seulement trois barrières de flux comprenant successivement de l'intérieur vers l'extérieur, ladite première barrière de flux, ladite deuxième barrière de flux et une troisième barrière de flux constituée d'un unique évidement de préférence sensiblement triangulaire.

Préférentiellement, l'unique évidement de ladite troisième barrière de flux est vide.

De manière préférée, l'évidement central de la première barrière de flux est vide.

L'invention concerne également une machine électrique comprenant un rotor selon l'une des variantes ou combinaisons de variantes décrites précédemment et un stator positionné autour du rotor, la machine électrique comprenant de préférence un arbre de rotor, le rotor étant fixé sur l'arbre de rotor.

Préférentiellement, la machine électrique est une machine synchrone à réluctance assistée par des aimants.

### Liste des figures

D'autres caractéristiques et avantages du rotor et/ou de la machine électrique selon l'invention, apparaîtront à la lecture de la description ci-après d'exemples non limitatifs de réalisations, en se référant aux figures annexées et décrites ci-après.
**[****Fig 1****]**

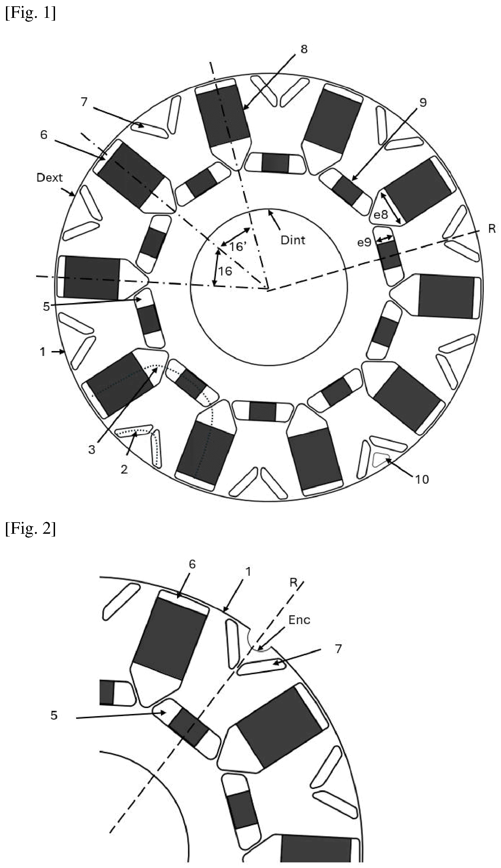

   La [Fig.1] représente un exemple de rotor selon l'invention.
**[****Fig 2****]**
   La [Fig.2] représente une variante de rotor selon l'invention.
**[****Fig 3****]**

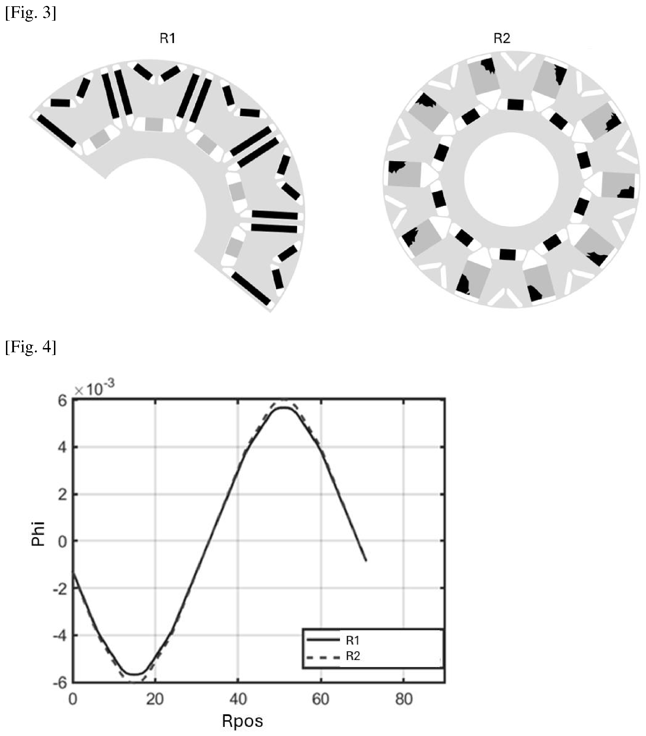

   La [Fig.3] représente une comparaison de démagnétisation d'un rotor selon l'art antérieur et d'un rotor selon l'invention.
**[****Fig 4****]**
   La [Fig.4] représente une comparaison de la variation du flux magnétique en fonction de la position angulaire d'un rotor selon l'art antérieur et d'un rotor selon l'invention.
**[****Fig 5****]**

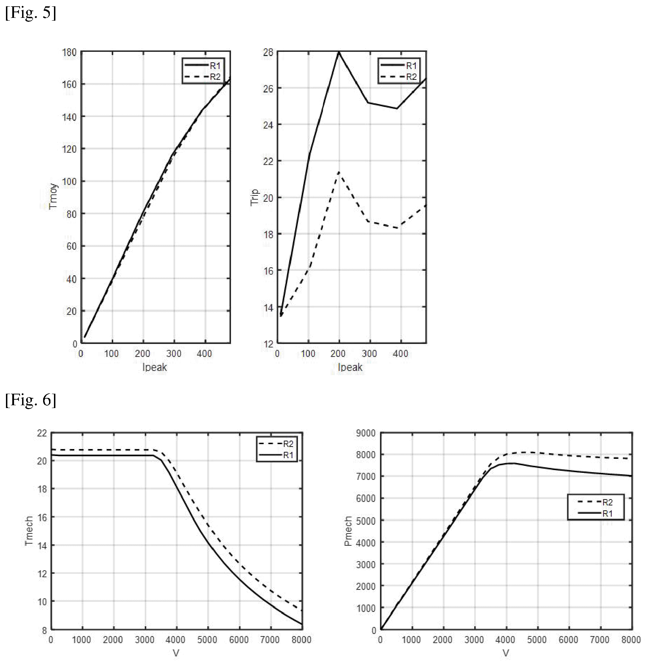

   La [Fig.5] représente une comparaison du couple moyen (schéma de gauche) et de l'ondulation de couple (schéma de droite) en fonction du courant d'un rotor selon l'art antérieur et d'un rotor selon l'invention.
**[****Fig 6****]**
   La [Fig.6] représente une comparaison du couple mécanique (schéma de gauche) et de la puissance mécanique (schéma de droite) en fonction de la vitesse de rotation d'un rotor selon l'art antérieur et d'un rotor selon l'invention.

### Description des modes de réalisation

L'invention concerne un rotor de machine électrique, notamment une machine électrique du type synchro-réluctante assistée d'aimants permanents.

En outre, la présente invention concerne une machine électrique comprenant un rotor selon l'une des variantes ou combinaisons de variantes de l'invention et un stator, le rotor étant disposé au sein du stator coaxialement à celui-ci : en d'autres termes, le stator est positionné autour du rotor. La rotation relative du rotor par rapport au stator permet :
- soit d'entraîner en rotation un élément par le rotor (dans ce cas, la machine électrique fonctionne en tant que moteur électrique),
- soit de transmettre la rotation pour transformer l'énergie en énergie électrique (dans ce cas, la machine électrique fonctionne en tant que générateur électrique).

Avantageusement, la machine électrique peut également comprendre un arbre de rotor sur lequel peut être positionné solidairement (par exemple fixé) le rotor.

La machine électrique peut avantageusement être une machine synchrone à réluctance assistée par des aimants (par les aimants permanents du rotor). Ce type de machine est particulièrement avantageux, car il permet un couple réluctant supplémentaire par rapport aux machines classiques à aimants en surface, une forte densité de couple et de puissance, tout en réduisant les coûts de l'onduleur et de la machine électrique.

Le rotor peut avantageusement être de forme cylindrique et tourner autour de l'axe de ce cylindre qui sert d'axe de rotation (entraîné par l'arbre de rotor par exemple).

Les dénominations « axial », « radial », circonférentiel », « intérieur », « extérieur », « interne » et « externe » s'entendent relativement à l'axe de rotation du rotor.

Le rotor comprend un corps de rotor formé par un empilage de tôles et une pluralité de paires de pôles magnétiques répartis circonférentiellement sur le corps de rotor. Les tôles du corps de rotor peuvent être réalisées en matériau ferromagnétique de manière à guider le flux magnétique créé par des aimants permanents et éventuellement le bobinage statorique.

Ainsi, le corps de rotor peut être entraîné en rotation via l'arbre de rotor ou entrainer l'arbre de rotor en rotation, la rotation étant réalisée autour de l'axe de rotation qui correspond à l'axe de l'arbre (l'arbre étant de préférence cylindrique ou sensiblement cylindrique).

Les pôles magnétiques successifs peuvent être séparés par des plans radiaux de séparation. Ainsi, ils sont séparés les uns des autres. Les plans radiaux de séparation découpent ainsi le corps de rotor en une pluralité de secteurs angulaires, l'ensemble des secteurs angulaires formant le corps de rotor. Chaque secteur angulaire du rotor forme un pôle magnétique.

Chaque pôle magnétique comprend une première barrière de flux (dite barrière interne) et une deuxième barrière de flux. De plus, pour chaque pôle magnétique, ladite première barrière de flux est constituée (de préférence exclusivement) de deux évidements latéraux positionnés et espacés de part et d'autre d'un évidement central, ledit évidement central étant perpendiculaire à un rayon dudit rotor, de manière à ce que la première barrière de flux forme sensiblement un « U » (selon une section transversale à l'axe du rotor, qui correspond au plan d'une tôle constituant le corps de rotor), le fond plat du U étant formé par l'évidement central et les barres latérales du U par les évidements latéraux. En outre, les évidements latéraux (ou évidements inclinés) de ladite première barrière de flux (interne) sont espacés de la périphérie du rotor. Préférentiellement, la première barrière de flux (interne) ne comprend aucun autre évidement : en d'autres termes, chaque première barrière de flux (interne) comprend uniquement les deux évidements latéraux et l'évidement central.

Additionnellement, pour chaque pôle magnétique, ladite deuxième barrière de flux est constituée (de préférence exclusivement) de deux évidements inclinés et espacés par rapport audit rayon perpendiculaire audit évidement central de ladite première barrière de flux (interne), de manière à ce que la deuxième barrière de flux forme un « V » (selon une section transversale à l'axe du rotor, qui correspond au plan d'une tôle constituant le corps de rotor), lesdits évidements inclinés de ladite deuxième barrière de flux étant espacés de la périphérie du rotor.

Les évidements des barrières de flux peuvent être obtenus par des perforations dans les tôles empilées formant le corps de rotor.

Lesdites première et deuxième barrières de flux de chaque pôle magnétiques sont les deux premières barrières de flux de l'intérieur vers l'extérieur. Autrement dit :
- il n'y a pas de barrière de flux située plus à l'intérieur du rotor que ladite première barrière de flux ;
- aucune barrière de flux n'est positionnée entre ladite première barrière de flux et ladite deuxième barrière de flux ;
- il peut éventuellement y avoir d'autres barrières de flux situées à l'extérieur de la deuxième barrière de flux.

De plus, les évidements latéraux des premières barrières de flux de deux pôles magnétiques successifs circonférentiellement sont partagés entre ces deux pôles magnétiques. Ainsi, un même évidement latéral d'une première barrière de flux (interne) d'un pôle sert également d'évidement latéral de la première barrière de flux (interne) du pôle adjacent (circonférentiellement).

En outre, le rotor comprend des aimants permanents positionnés dans chaque évidement latéral partagé : par conséquent, les aimants permanents de ces évidements latéraux partagés sont des aimants permanents partagés : ils servent à la fois à un pôle magnétique et à la fois au pôle magnétique directement adjacent.

Les aimants partagés présentent une magnétisation homogène et permettent de s'affranchir d'un pont (magnétique ou amagnétique). On appelle « pont » un joint de matière du corps de rotor (en matériau magnétique pour un « pont magnétique » ; en matériau amagnétique pour un « pont amagnétique ») situé entre deux évidements. Comme les aimants permanents sont partagés entre deux pôles magnétiques adjacents, l'invention s'affranchit d'au moins un pont entre deux évidements latéraux proches de deux ponts qui seraient séparés l'un de l'autre.

De préférence, des aimants permanents peuvent également être positionnés dans chaque évidement central de chaque première barrière de flux. Dans ce cas, tous les évidements (les deux évidements latéraux et l'évidement central) de chaque première barrière de flux comprennent des aimants permanents. Cela permet d'augmenter les performances magnétiques du rotor.

Alternativement, l'évidement central de la (chaque) première barrière de flux peut être vide. En effet, cette configuration permet d'éliminer le risque de démagnétisation d'un aimant qui serait positionné dans cet évidement central.

L'utilisation d'aimants permanents dans chaque pôle magnétique permet de générer un flux magnétique, permettant la rotation du rotor par la création d'un champ magnétique tournant pouvant être généré aussi par le stator. Les barrières de flux permettent de guider le champ magnétique généré par le rotor et par les aimants permanents vers l'entrefer (l'entrefer étant l'espace formé entre la périphérie du rotor et le stator), de manière à limiter les fuites de flux magnétiques et augmenter les performances (notamment couple et puissance) de la machine électrique. Une paire de pôles magnétiques comprend deux pôles magnétiques de polarité opposée.

L'épaisseur des aimants permanents correspond sensiblement à l'épaisseur des évidements dans lesquels chaque aimant est inséré. En d'autres termes, l'épaisseur des aimants permanents des évidements latéraux est sensiblement égale à l'épaisseur des évidements latéraux. De même, l'épaisseur des aimants permanents des évidements centraux (lorsqu'un aimant permanent est positionné dans les évidements centraux) est sensiblement égale à l'épaisseur des évidements centraux.

Selon un mode de réalisation de l'invention, lesdites barrières de flux de chaque pôle magnétique peuvent comprendre un plan de symétrie radial, de préférence ledit plan de symétrie radial passant par ledit rayon (perpendiculaire à l'évidement central). Ainsi, pour chaque pôle magnétique, les évidements latéraux des premières barrières de flux et/ou les évidements inclinés des deuxièmes barrières de flux peuvent être symétriques par rapport au plan radial passant par le rayon perpendiculaire à l'évidement central de la première barrière de flux (donc un plan orthogonal à la direction axiale du rotor). De préférence, la symétrie peut exister pour lesdites première et deuxième barrières de flux d'un même pôle magnétique. Ainsi, les évidements des différentes barrières de flux peuvent être préférentiellement symétriques par rapport à un plan radial (passant par ledit rayon R) de chaque pôle magnétique. Cette symétrie permet une optimisation des performances mécaniques de la machine électrique.

Avantageusement, l'évidement central de la première barrière de flux peut également être symétrique par rapport à un plan radial passant par ledit rayon qui lui est perpendiculaire (dans un plan orthogonal à la direction axiale du rotor).

Conformément à une mise en œuvre de l'invention, tous les pôles magnétiques du rotor peuvent être identiques : on entend par là que les sections des pôles magnétiques dans un plan orthogonal à la direction axiale peuvent se superposer les unes aux autres.

Les largeurs et/ou épaisseurs des évidements latéraux de chaque première barrière de flux peuvent de préférence être les mêmes pour tous les évidements latéraux de ces barrières des différents pôles magnétiques. Les largeurs et/ou épaisseurs des évidements centraux de chaque première barrière de flux peuvent de préférence être les mêmes pour tous les évidements latéraux de ces barrières des différents pôles magnétiques. De même, les largeurs et/ou épaisseurs des évidements inclinés de chaque deuxième barrière de flux peuvent de préférence être les mêmes pour tous les évidements inclinés de ces barrières des différents pôles magnétiques.

Selon l'invention, l'épaisseur des aimants permanents des évidements latéraux partagés des premières barrières de flux est d'au moins 2,3 fois (de préférence au moins 2,5 fois, de manière encore préférée au moins 3 fois, voire au moins 4 fois) l'épaisseur de l'évidement central des premières barrières de flux (du même pôle). De ce fait, le rapport épaisseur/largeur des aimants permanents partagés est plus favorable. Cela permet d'améliorer sa rigidité, réduit les rebus de fabrication des tôles et/ou des aimants et renforce sa résistance à la démagnétisation. En outre, cette caractéristique permet de simplifier considérablement le procédé de conception, de fabrication et le montage.

En outre, l'épaisseur qui était dédiée aux ponts (magnétiques ou amagnétiques) séparant les évidements latéraux séparés de deux pôles magnétiques adjacents peut être remplacée par une épaisseur d'aimant, ce qui améliore encore les avantages de cette solution.

Selon une variante de l'invention, la section (dans un plan de coupe orthogonale à la direction axiale/longitudinale de la machine électrique) des aimants permanents des évidements latéraux partagés peut être d'au moins 3 fois, voire 4 fois la section (dans un plan de coupe orthogonale à la direction axiale/longitudinale de la machine électrique) de l'évidement central des premières barrières de flux (du même pôle).

On entend par « épaisseur des aimants permanents des évidements latéraux » ou par « épaisseur des évidements latéraux », la dimension respectivement des aimants permanents ou des évidements latéraux, dans une direction sensiblement orthogonale à la direction radiale et à la direction axiale (c'est-à-dire le long de l'axe de rotation) du rotor, donc sensiblement circonférentielle. Lorsque cette dimension est variable le long de la direction principale (sensiblement radiale), l'épaisseur est alors considérée comme la valeur moyenne de cette dimension le long de la direction radiale. De préférence, les évidements latéraux et/ou les aimants permanents peuvent comprendre de extrémités planes parallèles latérales, si bien que l'épaisseur est alors la distance entre ces extrémités planes parallèles latérales.

On entend par « largeur des aimants permanents des évidements latéraux » ou par « largeur des évidements latéraux », la dimension de la section de ces aimants permanents sensiblement orthogonale à l'épaisseur dans un plan sensiblement orthogonal à la direction axiale (c'est-à-dire le long de l'axe de rotation) du rotor : il s'agit donc de la dimension dans la direction principale des évidements latéraux. Lorsque cette dimension est variable le long de la direction de l'épaisseur, la largeur est alors considérée comme la valeur moyenne de cette dimension (principale, sensiblement radiale) le long de la direction de l'épaisseur. De préférence, les aimants permanents peuvent comprendre de extrémités planes parallèles frontales (ou radiales interne et externe), si bien que la largeur est alors la distance entre ces extrémités planes parallèles frontales.

On entend par « épaisseur de l'aimant permanent de l'évidement central » ou par « épaisseur de l'évidement central », la dimension respectivement de l'aimant permanent ou de l'évidement central, dans une direction dans la direction radiale du rotor. Lorsque cette dimension est variable le long de la direction orthogonale à la direction radiale dans un plan orthogonal à la direction axiale, donc sensiblement dans la direction circonférentielle, l'épaisseur est alors considérée comme la valeur moyenne de cette dimension le long de la direction orthogonale à la direction radiale dans un plan orthogonal à la direction axiale. De préférence, l'évidement central et/ou l'aimant permanent peuvent comprendre de extrémités planes parallèles orthogonales à la direction radiale, si bien que l'épaisseur est alors la distance entre ces extrémités planes parallèles.

On entend par « épaisseur des évidements inclinés », la plus petite dimension principale (dans une des deux directions principales) de la section des évidements inclinés dans un plan orthogonal à la direction axiale, la section comprenant deux directions principales dans ce plan. Lorsque cette dimension est variable le long de la plus grande dimension principale, l'épaisseur est alors considérée comme la valeur moyenne de cette dimension le long de la direction principale de plus grande dimension. De préférence, les évidements inclinés peuvent comprendre de extrémités planes parallèles inclinées, si bien que l'épaisseur est alors la distance entre ces extrémités planes parallèles inclinées.

De préférence, les évidements inclinés de chaque deuxième barrière de flux peuvent être vides. On entend par là qu'ils ne comprennent pas d'aimants et que seul l'air peut circuler dans ces évidements inclinés. Ces évidements inclinés vides permettent de réduire les ondulations de couple et de protéger les aimants permanents partagés de la démagnétisation.

De manière avantageuse, l'épaisseur des aimants permanents (partagés) des évidements latéraux partagés des premières barrières de flux peut être d'au moins 6mm et l'épaisseur de l'évidement central peut être inférieure à 5mm, et préférentiellement inférieure à 2mm, voire à 1,5mm (les épaisseurs maximales de 2mm voire de 1,5mm étant particulièrement avantageuses lorsque cet évidement central ne comprend aucun aimant permanent). De ce fait, ces aimants permanents partagés peuvent remplacer 3 voire 4 aimants de 1,5mm d'épaisseur. Cela facilite la fabrication en limitant le nombre de rebus, améliore la rigidité de l'aimant et renforce sa résistance à la démagnétisation.

Selon une configuration de l'invention, les évidements latéraux partagés de deux pôles magnétiques successifs peuvent être de section rectangulaire, carrée, trapézoïdale, ou polygonale. Si les évidements latéraux partagés sont de section rectangulaire, l'épaisseur de ces évidements (et des aimants permanents partagés mis en place dans ces évidements) correspond au petit côté de la section rectangulaire (et la largeur au grand côté). Si les évidements latéraux partagés sont de section carrée, l'épaisseur et la largeur de ces évidements (et des aimants permanents partagés mis en place dans ces évidements) correspondent au côté de la section carrée. Si les évidements latéraux partagés sont de section trapézoïdale, l'épaisseur de ces évidements (et des aimants permanents partagés mis en place dans ces évidements) correspond à la hauteur de la section trapézoïdale (et la largeur à la moitié de la-somme des bases).

Selon un aspect de l'invention, les évidements inclinés de la deuxième barrière de flux peuvent être de section trapézoïdale, rectangulaire, carrée ou triangulaire. Si les évidements inclinés partagés sont de section rectangulaire, l'épaisseur de ces évidements correspond au petit côté de la section rectangulaire (et la largeur au grand côté). Si les évidements latéraux partagés sont de section carrée, l'épaisseur et la largeur de ces évidements (et des aimants permanents partagés mis en place dans ces évidements) correspondent au côté de la section carrée. Si les évidements latéraux partagés sont de section trapézoïdale, l'épaisseur de ces évidements (et des aimants permanents partagés mis en place dans ces évidements) correspond à la hauteur de la section trapézoïdale (et la largeur à la moitié de la somme des bases).

Selon un mode de réalisation avantageux de l'invention, le rotor peut avoir un diamètre extérieur inférieur à 200 mm, de préférence inférieur à 150mm et de manière encore préférée inférieur à 120mm. Ainsi, le rotor est de petite taille et représente donc un encombrement réduit pour le positionnement des pôles magnétiques, des différentes barrières de flux, des évidements et des aimants. Notamment, avec un tel rotor, les aimants qui ne seraient pas partagés entre les pôles, seraient de petite épaisseur (inférieure à 3mm) et donc sensibles à la démagnétisation. La définition du rotor selon l'invention est particulièrement intéressante pour ces rotors de petite taille car l'utilisation d'aimants partagés entre pôles magnétiques, permet d'augmenter l'épaisseur des aimants en réduisant le risque de démagnétisation. De plus, la mise en commun d'aimants partagés entre 2 pôles n'a pas ou très peu d'impact sur les performances du rotor et de la machine électrique.

Selon une variante de l'invention, le rotor peut comprendre au moins une encoche sur la périphérie cylindrique externe dudit rotor, ladite encoche étant positionnée sensiblement au niveau d'un plan radial passant par le rayon R d'un desdits pôles magnétiques. Cette encoche peut aider à diriger le flux magnétique et à réduire les ondulations de couple.

De préférence, le rotor peut comprendre des encoches positionnées sensiblement au niveau du plan radial passant par le rayon R de chaque pôle magnétique. Le flux magnétique de chaque pôle magnétique peut ainsi être mieux dirigé.

Selon une caractéristique de l'invention, les différents pôles magnétiques peuvent être dissymétriques (ou asymétriques), de préférence deux à deux successivement. On entend par là que les pôles magnétiques successifs séparés par des plans radiaux de séparation ne sont pas symétriques par rapport à ce plan radial de séparation. Par deux à deux successivement, on entend que quelques soient les deux pôles magnétiques successifs circonférentiellement, ces 2 pôles sont dissymétriques.

Selon une variante avantageuse de l'invention, chaque pôle magnétique peut être constitué de seulement deux barrières de flux (donc uniquement deux barrières de flux), lesdites deux barrières de flux étant constituée de ladite première barrière de flux (dite barrière de flux interne) et de ladite deuxième barrière de flux (appelée dans ce cas barrière de flux externe). Cette configuration est particulièrement avantageuse avec un rotor dit « de petite taille » comme évoqué précédemment. En effet, un tel rotor a un encombrement réduit. Cette configuration permet une optimisation de la fabrication, de l'encombrement et des performances du rotor.

Alternativement, chaque pôle magnétique est constitué de seulement trois barrières de flux comprenant successivement de l'intérieur vers l'extérieur, ladite première barrière de flux (dite barrière de flux interne), ladite deuxième barrière de flux et une troisième barrière de flux (qui constitue donc dans ce cas la barrière de flux externe) constituée d'un unique évidement de préférence sensiblement triangulaire. Cette configuration est également particulièrement avantageuse avec un rotor dit « de petite taille » comme évoqué précédemment. En effet, un tel rotor a un encombrement réduit. Cette configuration est un peu plus complexe à réaliser en raison de la présence de l'unique évidement de la troisième barrière de flux (par rapport à la variante du paragraphe précédent) mais elle permet d'améliorer les performances de guidage du flux et de limiter encore le risque de démagnétisation des aimants permanents partagés (et des aimants permanents de l'évidement central lorsqu'ils sont utilisés), notamment lorsque le diamètre de rotor est d'au moins 150mm. Elle permet aussi d'alléger le rotor. Cette configuration est également très pertinente pour les rotors dits « de petite taille » évoqués précédemment.

De préférence, l'unique évidement de ladite troisième barrière de flux peut être vide, de manière à pouvoir encore limiter les risques de démagnétisation des aimants permanents.

L'unique évidement de la troisième barrière de flux (de préférence de chaque pôle magnétique) peut être centré sur le plan radial passant par ledit rayon R perpendiculaire à l'évidement central et de préférence, il peut être symétrique par rapport à ce plan radial. Ainsi, la troisième barrière de flux a également un plan de symétrie qui est constitué par ce plan radial passant par ledit rayon R perpendiculaire à l'évidement central (comme lesdites première et deuxième barrières de flux de chaque pôle magnétique).

La [Fig.1] illustre, de manière schématique et non limitative, un exemple de rotor selon l'invention.

Le rotor comprend un corps de rotor, qui peut être composé d'un empilage de tôles. Ce corps de rotor peut, comme représenté, être de section sensiblement annulaire délimitée par un diamètre interne Dint et un diamètre externe Dext. Un arbre de rotor peut être positionné (fixé) dans le rotor et cet arbre peut avoir un diamètre externe sensiblement égal au diamètre interne Dint du rotor. La périphérie du rotor 1, délimitée par le diamètre externe Dext, est donc cylindrique ou sensiblement cylindrique.

Ce rotor comprend plusieurs pôles magnétiques 16, 16' (ici 10 pôles magnétiques, soit 5 paires de pôles mais un nombre différent de paires de pôles pourrait être utilisé).

Les limites de certains pôles magnétiques 16 et 16' sont représentées par les lignes en traits mixtes qui correspondent aux plans radiaux de séparation des pôles magnétiques. Les pôles magnétiques adjacents peuvent être symétriques (dans ce cas, les angles formés par le secteur angulaire des différent pôles sont tous identiques) ou dissymétriques (dans ce cas, l'angle formé par le secteur angulaire d'un des 2 pôles peut être différent de l'angle formé par le secteur angulaire de l'autre).

Ici, chacun des pôles comprend une première barrière de flux 3 qui est la barrière de flux interne (autrement dit, il n'y a pas d'autre barrière de flux plus proche de l'axe du rotor) et une deuxième barrière de flux 2 qui est directement adjacente à la première barrière de flux 3 (autrement dit, le rotor ne comprend aucune barrière de flux située entre la première barrière de flux 3 et la deuxième barrière de flux 2).

Sur la figure, les première et deuxième barrières de flux sont représentées par les lignes courbes en pointillés.

La première barrière de flux 3 consiste en trois évidements : un évidement central 5 et deux évidements latéraux 6 (ici radiaux). La première barrière de flux forme ainsi un « U ». Des ponts de matière du corps de rotor séparent l'évidement central 5 de chacun des évidements latéraux 6 et un pont de matière du corps de rotor sépare également les évidements latéraux 6 de la périphérie du rotor 1.

Les évidements latéraux 6 de la première barrière de flux 3 comprennent tous des aimants permanents 8. Ces aimants permanents 8 sont des aimants permanents partagés entre deux pôles adjacents (et les évidements latéraux 6 sont également partagés entre deux pôles adjacents).

Les évidements centraux 5 de la première barrière de flux 3 comprennent tous des aimants permanents 9. Mais une alternative de l'invention, serait de laisser ces évidements centraux 5 vides, c'est-à-dire sans aimants permanents à l'intérieur.

La deuxième barrière de flux 2 consiste en deux évidements inclinés 7 de manière à former un « V ». Les évidements inclinés 7 sont séparés entre eux par un joint de matière du corps de rotor et ils sont également séparés de la périphérie du rotor 1 par un autre joint de matière du corps de rotor.

En outre, les évidements inclinés 7 de la deuxième barrière de flux 2 sont également séparés par la matière du corps de rotor, des évidements latéraux 6 et des évidements centraux 5 de la première barrière de flux 3.

Chaque aimant central 9 (et donc chaque évidement central 5) est orthogonal à un rayon R passant sensiblement par la moitié de la largeur (orthogonale à l'épaisseur e9 de l'aimant central dans la section représentée orthogonale à l'axe du rotor). Le plan radial passant par ce rayon R forme un plan de symétrie pour chacune des première et deuxième barrières de flux, et ce pour chaque pôle magnétique. Ainsi les évidements latéraux 6 d'un même pôle magnétique sont symétriques entre eux par rapport à ce plan radial de symétrie et les évidements inclinés 7 d'un même pôle magnétique sont symétriques entre eux par rapport à ce plan radial de symétrie.

Préférentiellement, chaque pôle magnétique 16, 16' ne comprend que ces deux barrières de flux : chaque pôle magnétique consiste alors en uniquement deux barrières de flux : la deuxième barrière de flux est alors la barrière de flux interne.

Alternativement, au moins un pôle magnétique, ou une partie des pôles magnétiques (par exemple tous les pôles magnétiques) peut comprendre une troisième barrière de flux qui ne comprend qu'un seul évidement (par exemple triangulaire ici mais une autre forme pourrait être utilisée) 10. Sur la figure, cet unique évidement triangulaire 10 est représenté sur un seul pôle pour montrer le caractère optionnel mais il est évident que cet évidement triangulaire (ou d'une autre forme) pourrait être utilisé sur d'autres pôles magnétiques.

Ces évidements triangulaires 10 (ou d'une autre forme) présentent également une symétrie par rapport au plan radial de symétrique passant par le rayon R. En d'autres termes, les évidements triangulaires 10 sont formés ici par un triangle isocèle ou équilatéral.

Le ou les évidements triangulaires 10 (ou d'une autre forme) sont séparés des évidements inclinés 7 de la deuxième barrière de flux 2 par un pont de matière et ils sont également séparés de la périphérie du rotor 1 par un autre pont de matière.

Ainsi, chaque pôle magnétique du rotor de l'invention comprend uniquement (donc consiste en) deux ou trois barrières de flux. Cela est particulièrement intéressant pour les rotors dits « de petite taille ».

En outre, l'épaisseur e8 des aimants permanents partagés 8 est d'au moins 2,3 fois l'épaisseur e9 des évidements centraux 5 (qui correspond ici à l'épaisseur des aimants centraux 9).

La [Fig.2] illustre, de manière schématique et non limitative, une portion de rotor d'une variante de l'invention.

Le rotor correspond sensiblement à celui de la [Fig.1]. Les mêmes références correspondant aux mêmes éléments. Il ne diffère de la description de la [Fig.1] que par le fait que :
- chacun des pôles magnétiques ne comprend pas de troisième barrière de flux (donc il n'a pas d'évidement triangulaire de troisième barrière de flux) : chaque pôle magnétique consiste en deux (et seulement deux) barrières de flux.
- La périphérie du rotor 1 comprend une encoche Enc sensiblement en vis-à-vis de l'aimant central, c'est-à-dire positionné sensiblement au niveau du rayon R perpendiculaire à l'évidement central 5. Cette encoche Enc peut avoir un profil symétrique par rapport au plan radial passant par le rayon R.

La [Fig.3] illustre, de manière schématique et non limitative, une comparaison de démagnétisation d'un rotor selon l'art antérieur et d'un rotor selon l'invention.

Sur les schémas, les zones représentées en noir correspondent aux zones de démagnétisation des aimants permanents.

Le schéma de gauche A1 montre ainsi la démagnétisation pour un rotor de l'art antérieur selon la demande WO2022/128541 A1 et pour un rotor selon l'invention, de mêmes diamètres externe et interne. Pour le rotor de l'art antérieur, tous les évidements des barrières de flux comprennent des aimants permanents.

Sur le schéma de gauche R1 de l'art antérieur, les aimants latéraux ont une épaisseur de 1,5mm alors que sur le schéma de droite R2 de l'invention, les aimants latéraux partagés ont une épaisseur de 6mm. Comme on peut le voir, cette épaisseur permet de protéger les aimants latéraux partagés de la démagnétisation, comparativement à l'art antérieur.

Sur le schéma R1 de gauche de l'art antérieur, la démagnétisation représente environ 85% des aimants permanents, alors que sur le schéma R2 de droite de l'invention, la démagnétisation est réduite à environ 30%. De plus, cette démagnétisation sur le schéma R2 de droite de l'invention concerne essentiellement l'aimant central de la première barrière de flux qui a un impact plus faible sur la production de couple que les aimants latéraux partagés. Ainsi, la démagnétisation du rotor de l'invention a un impact considérablement réduit par rapport à celle du rotor de l'art antérieur.

La [Fig.4] représente une comparaison de la variation du flux magnétique Phi (en Weber Wb) en fonction de la position angulaire Rpos (en degré) du même rotor selon l'art antérieur R1 que la [Fig.3] et du même rotor selon l'invention R2 que la [Fig.3].

L'utilisation d'aimants partagés avec une épaisseur importante (relativement à celle de l'art antérieur) pour le rotor de l'invention, permet d'augmenter le flux magnétique de 4%.

La [Fig.5] représente une comparaison du couple moyen Tmoy (schéma de gauche) en N.m et de l'ondulation de couple Trip (schéma de droite), en pourcentage de couple moyen, en fonction du courant Ipeak, en ampère, du même rotor selon l'art antérieur R1 que la [Fig.3] et du même rotor selon l'invention R2 que la [Fig.3].

On peut observer que le couple moyen est sensiblement inchangé mais que les ondulations de couple sont réduites d'environ 20% pour le rotor de l'invention R2 par rapport au rotor de l'art antérieur R1.

La [Fig.6] représente une comparaison du couple mécanique Tmech (schéma de gauche), en N.m, et de la puissance mécanique Pmech (schéma de droite), en W, en fonction de la vitesse de rotation V (en tours par minute), d'un rotor de l'art antérieur R1 et d'un rotor selon l'invention R2.

Le rotor de l'art antérieur R1 correspond à la demande WO2022/128541 A1, qui a les mêmes diamètres externe et interne que le rotor de l'invention. Pour le rotor de l'art antérieur, tous les évidements des barrières de flux comprennent des aimants permanents.

Le rotor R1 de l'art antérieur a des aimants latéraux d'une épaisseur de 1,5mm alors que les aimants latéraux partagés du rotor R2 de l'invention ont une épaisseur de 6mm.

Le rotor de l'invention R2 permet d'augmenter la puissance d'environ 11% par rapport au rotor R1 de l'art antérieur et d'avoir une puissance sensiblement constante sur une grande plage de vitesse. De plus, le rotor de l'invention permet une augmentation de couple d'environ 3% par rapport au rotor R1 de l'art antérieur.

## Revendications

1. Rotor de machine électrique comprenant un corps de rotor formé par un empilage de tôles, et une pluralité de paires de pôles magnétiques (16, 16') répartis circonférentiellement sur le corps de rotor, chaque pôle magnétique (16, 16') comprenant une première barrière de flux (3) et une deuxième barrière de flux (2), pour chaque pôle magnétique (16, 16') ladite première barrière de flux (3) étant constituée de deux évidements latéraux (6) positionnés et espacés de part et d'autre d'un évidement central (5), ledit évidement central (5) étant perpendiculaire à un rayon (R) dudit rotor de manière à ce que ladite première barrière de flux (3) forme un « U », lesdits évidements latéraux (6) de ladite première barrière de flux (3) étant espacés de la périphérie du rotor (1), pour chaque pôle magnétique (16, 16') ladite deuxième barrière de flux (2) étant constituée de deux évidements inclinés (7) et espacés par rapport audit rayon perpendiculaire (R) audit évidement central (5) de ladite première barrière de flux (3) de manière à ce que la deuxième barrière de flux (2) forme un « V », lesdits évidements inclinés (7) de ladite deuxième barrière de flux (2) étant espacés de la périphérie du rotor (1), lesdites première et deuxième barrières de flux (2, 3) étant les deux premières barrières de flux de l'intérieur vers l'extérieur, les évidements latéraux (6) des premières barrières de flux (3) de deux pôles magnétiques successifs circonférentiellement étant partagés entre desdits deux pôles magnétiques successifs, le rotor comprenant des aimants permanents positionnés dans chaque évidement latéral (6) partagé de chaque première barrière de flux (3), et de préférence dans chaque évidement central (5) de chaque première barrière de flux (1), **caractérisé en ce que** l'épaisseur (e8) des aimants permanents (8) des évidements latéraux (7) partagés desdites premières barrières de flux (3) est d'au moins 2,3 fois l'épaisseur (e9) de l'évidement central (5) des premières barrières de flux (3).

2. Rotor selon la revendication 1, dans lequel les évidements inclinés (7) de chaque deuxième barrière de flux (2) sont vides.

3. Rotor selon l'une des revendication précédentes, dans lequel l'épaisseur (e8) des aimants permanents (8) des évidements latéraux (6) partagés des premières barrières de flux (3) est d'au moins 6mm, et l'épaisseur (e9) de l'évidement central (5) est inférieure à 5mm, de préférence inférieure à 2mm, et de manière encore préférée inférieure à 1,5mm.

4. Rotor selon l'une des revendications précédentes, dans lequel les évidements latéraux (6) partagés de deux pôles magnétiques successifs sont de section rectangulaire, carrée, trapézoïdale, ou polygonale.

5. Rotor selon l'une des revendications précédentes, dans lequel les évidements inclinés (7) de la deuxième barrière de flux (2) sont de section trapézoïdale, rectangulaire, carrée ou triangulaire.

6. Rotor selon l'une des revendications précédentes, dans lequel le rotor a un diamètre extérieur (Dext) inférieur à 200 mm, de préférence inférieur à 150mm et de manière encore préférée inférieur à 120mm.

7. Rotor selon l'une des revendications précédentes, dans lequel lesdites barrières de flux de chaque pôle magnétique comprennent un plan de symétrie radial, de préférence ledit plan de symétrie radial passant par ledit rayon (R).

8. Rotor selon l'une des revendications précédentes, dans lequel le rotor comprend au moins une encoche (Enc) sur la périphérie (1) cylindrique externe dudit rotor, ladite encoche (Enc) étant positionnée sensiblement au niveau d'un plan radial passant par le rayon (R) d'un desdits pôles magnétiques (16, 16').

9. Rotor selon la revendication 8, dans lequel le rotor comprend une encoche (Enc) pour chaque pôle magnétique, chacune des encoches étant positionnées sensiblement au niveau du plan radial passant par ledit rayon (R) de chaque pôle magnétique.

10. Rotor selon l'une des revendications précédentes, dans lequel les différents pôles magnétiques (16, 16') sont dissymétriques, de préférence deux à deux successivement.

11. Rotor selon l'une des revendications précédentes, dans lequel chaque pôle magnétique (16, 16') est constitué de seulement deux barrières de flux, lesdites deux barrières de flux étant constituée de ladite première barrière de flux (3) et de ladite deuxième barrière de flux (2).

12. Rotor selon l'une des revendications 1 à 10, dans lequel chaque pôle magnétique (16, 16') est constitué de seulement trois barrières de flux comprenant successivement de l'intérieur vers l'extérieur, ladite première barrière de flux (3), ladite deuxième barrière de flux (2) et une troisième barrière de flux constituée d'un unique évidement de préférence sensiblement triangulaire (10).

13. Rotor selon la revendication 12, dans lequel l'unique évidement (10) de ladite troisième barrière de flux est vide.

14. Rotor selon l'une des revendications précédentes, dans lequel l'évidement central (5) de la première barrière de flux (3) est vide.

15. Machine électrique comprenant un rotor selon l'une des revendications précédentes et un stator positionné autour du rotor, la machine électrique comprenant de préférence un arbre de rotor, le rotor étant fixé sur l'arbre de rotor.

16. Machine électrique selon la revendication 15, dans laquelle la machine électrique est une machine synchrone à réluctance assistée par des aimants.
